# EUROPEAN PATENT APPLICATION

(11) **EP 3 489 578 A1**
(43) Date of publication of application: **29.05.2019**
(21) Application number: 17382796.5
(22) Date of filing: 24.11.2017
(51) Int. Cl.: F21S 45/10, F21V 23/00, B60Q 1/00, B60R 16/02, H02G 3/32, F21V 27/00

(54) **LIGHTING DEVICE AND METHOD FOR MANUFACTURING A LIGHTING DEVICE**

(71) Applicant: Valeo Iluminacion, 23600 Martos (ES)
(72) Inventor: GUZMAN, Alfonso-Manuel, 23600 MARTOS (ES); MARTINEZ, Francisco, 23600 MARTOS (ES); MEDINA, Manuel-Jesus, 23600 MARTOS (ES); MARTINEZ, Juan-Carlos, 23600 MARTOS (ES); TEBA, Daniel, 23600 MARTOS (ES); SANCHEZ, Jose-Alberto, 23600 MARTOS (ES); RAMA, Beatriz, 23600 MARTOS (ES)

(57) **Abstract**

The invention provides a lighting device (1) comprising a housing (2) with an inner surface (21), a pair of walls (22) located in the inner surface (21) of the housing (2), a plurality of conductive wires (3) located between the walls (22) and a retention element (4). The conductive wires (3) are surrounded by the walls (22), a retention portion (41) of the retention element (4) and a portion of the inner surface (21) of the housing (2). The invention also refers to a method of manufacturing such a lighting device (1).

## Description

### TECHNICAL FIELD

This invention is related to the field of automotive lighting devices, and to the manufacturing process thereof.

### STATE OF THE ART

When manufacturing a lighting device, wires harnesses are located uncontrolledly along the inner surface of the housing. Spare portions are loose, so they may be entangled or even cut by other elements. This may happen during the lifetime of the lighting device or even in the manufacturing process.

In known solutions, a harness is gathered by a flange, and then this flange is attached to the inner surface of the housing. This avoids the conductive wires being freely arranged in the interior of the housing, but sometimes is not enough to prevent the conductive wires from being accidentally cut or trapped between two elements, mostly in their manufacturing process.

### DESCRIPTION OF THE INVENTION

The invention provides an alternative solution for locating wires inside a lighting device housing by means of a lighting device according to claim 1 and a method for manufacturing a lighting device according to claim 12. Preferred embodiments of the invention are defined in dependent claims.

In an inventive aspect, the invention provides a lighting device comprising
a housing with an inner surface;
a pair of walls located in the inner surface of the housing;
a plurality of conductive wires located between the walls; and
a retention element, so that the conductive wires are surrounded by the walls, a retention portion of the retention element and a portion of the inner surface of the housing.

Such a lighting device provides a complete case for the conductive wires. Since these wires are totally surrounded and therefore perfectly located, entangling or cutting is prevented.

In some particular embodiments, the retention element is a staple.

Choosing a staple as a retention element allows the optimization of the design, since suitable staples may be chosen depending on the size and number of the conductive wires. Further, the arrangement of a staple is an easy task which may be automatized.

In some particular embodiments, the retention portion of the staple has a rounded edge.

This rounded edge prevents the staple for damaging the conductive wires when they accidentally touch the staple, by vibrations or sudden movements of the lighting device.

In some particular embodiments, the staple comprises two piercing pins, each piercing pin being nailed into one of the walls.

This alternative is very fast to implement in mass production, since staple machines are very well known.

In other particular embodiments, the staple comprises two clamping arms, each clamping arm being clamped to one of the walls.

This alternative is also advantageous, since the clamping arms do not alter the walls, and may be removable without leaving a permanent damage therein.

In some particular embodiments, each wall comprises a clamping housing for receiving a clamping arm.

Clamping housings makes installation easier, and also improves safety, since clamping staples are less likely to unnoticedly detach.

In some particular embodiments, the walls are divided into wall portions.

Walls need not to be continuous, there are some portions of the conductive wires which may run without being surrounded by walls, as long as they are tight enough to stay close to the housing in the event of vibrations or sudden movements thereof. This allows a more flexible design of the housing, since there is no need that the whole path of the conductive wires is surrounded by walls.

In some particular embodiments, the wall portions are cylindrical protrusions protruding from the housing inner surface.

Since there is no need that the walls are continuous, there is no need that these walls have a specific shape. Rounded protrusions are easy to manufacture and suits perfectly with nailed staples, providing an optimal surface to receive them.

In some particular embodiments, the walls are parallel and the distance between them is comprised between 1 and 2 cm.

This distance is suitable for providing space enough for conductive wires in a common lighting device.

In some particular embodiments, the height of each wall, in the sense of distance from the housing, is comprised between 0.2 and 1 cm.

This distance is suitable for providing space enough for conductive wires in a common lighting device.

In some particular embodiments, the thickness of each wall, in a direction perpendicular to the height and to the direction of the conductive wires, is comprised between 0.2 and 1 cm.

This distance is suitable for providing space enough for arranging the retention elements in a common lighting device.

In a further inventive aspect, the invention provides a method for manufacturing a lighting device, with the steps of
providing a housing with an inner surface and a pair of walls located in the inner surface of the housing;
providing a plurality of conductive wires located between the walls;
closing the plurality of conductive wires with a retention element, so that the plurality of conductive wires are surrounded by the walls, a retention portion of the retention element and a portion of the inner surface of the housing.

This method is easily automatized, and produces a lighting device which provides a complete case for the conductive wires. Since these wires are totally surrounded and therefore perfectly located, entangling or cutting is prevented.

In some particular embodiments, the step of closing comprises nailing a staple into the walls.

A staple is an easy and common element which fits perfectly in the method of the invention.

In some particular embodiments, the step of closing comprises clamping a staple encompassing a portion of the walls.

Clamping a staple is also an easy step, and produces lighting devices where conductive wires are confined in an easy and safe way. Clamping staples are easy to detach and replace in the event a wire or the staple indeed needs replacing.

In a further inventive aspect, the invention provides a vehicle comprising a lighting device according to the first inventive aspect.

This vehicle is less prone to suffer a connection failure, due to the fact that the connective wires are kept in place by means of the aforementioned features.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figures 1a to 1d show steps of a particular embodiment of a method for manufacturing a lighting device according to the invention.
Figures 2a to 2c show steps of a different particular embodiment of a method for manufacturing a lighting device according to the invention.
Figure 3 shows a lighting device according to the invention in an automotive vehicle.

### DETAILED DESCRIPTION OF THE INVENTION

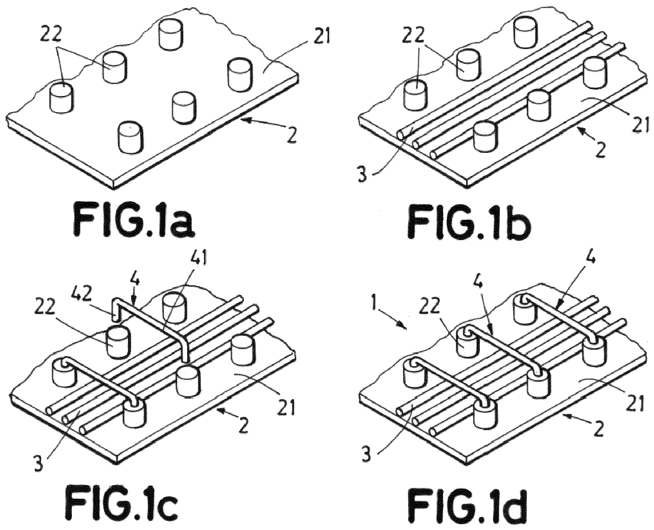

Figure 1a shows the first step of a particular embodiment of a method for manufacturing a lighting device according to the invention.

This method provides a lighting device housing 2. This lighting device housing 2 comprises an inner surface 21 and several walls 22 located in the inner surface 21. Walls 22 need not to be continuous, and in this particular example, there are some portions of the conductive wires 3 which run without being surrounded by walls 22, as long as they are tight enough to stay close to the housing 2 in the event of vibrations or sudden movements thereof. Accordingly, these figures show wall portions, implemented as cylindrical protrusions protruding from the housing inner surface 21.

Figure 1b shows a second step of this method, where a plurality of conductive wires 3 are provided, and arranged between the wall portions 22. Wall portions 22 define a continuous path for the conductive wires 3, although there themselves are not continuous walls. However, they provide the same technical effect in guiding the conductive wires 3 as the continuous walls.

Figure 1c shows a third step of this method, where the plurality of conductive wires 3 are closed with a staple 4, so that the plurality of conductive wires 3 are surrounded by the wall portions 22, a retention portion 41 of the staple 4 and a portion of the inner surface 21 of the housing 2. The staple 4 comprises two piercing pins 42, which are nailed into the wall portions 22, thus achieving the complete closure of the conductive wires 3 between the staple 4, the walls 22 and a portion of the inner surface 21 of the housing 2. The retention portion 41 of the staple 4 is the portion which is intended to be seen by the conductive wires 3. It has a rounded edge, so that in the event some conductive wires 3 touch the retention portion 41, they are not damaged or cut by the retention portion 41.

Figure 1d shows a lighting device 1 according to the invention. As may be seen in this figure, there is no need to provide a continuous closing for the conductive wires 3; only a few staples 4 are enough to keep the conductive wires 3 between the wall portions 22.

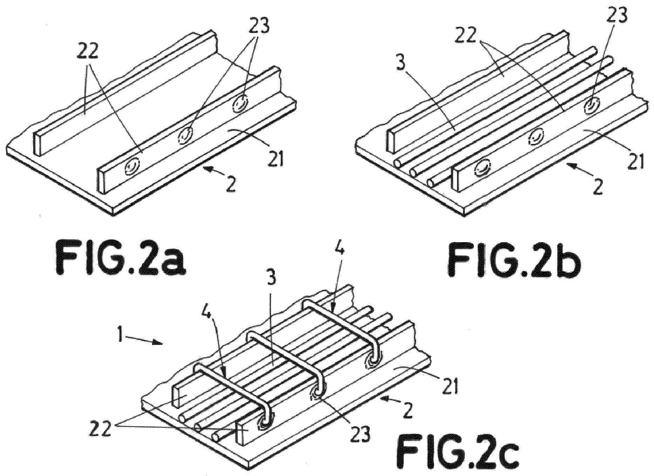

Figures 2a to 2c shows another embodiment of a method according to the invention. The lighting device housing 2 of this example comprises an inner surface 21 and several walls 22' located in the inner surface 21. In figure 2b a plurality of conductive wires 3 are provided, and arranged between the walls 22'.

This embodiment is similar to the previous one, but in this case, the staples 4 are clamped on the walls 22', achieving a different closure. The staple 4 comprises two clamping arms 43, and each clamping arm 43 is clamped to one of the walls 22'. Each wall 22' comprises a clamping housing 23 for receiving a clamping arm 43, so that the clamping operation is more secure and staples 4 are more strongly fixed to the walls 22'.

The walls 22' are parallel, and the distance between them is comprised between 1 and 2 cm. Further, the height h of each wall 22', in the sense of distance from the housing 2, is comprised between 0.2 and 1 cm, and the thickness t of each wall 22', in a direction perpendicular to the height and to the direction of the conductive wires, is comprised between 0.2 and 1 cm. These dimensions are chosen depending on the number and size of the conductive wires which are provided between the walls 22'.

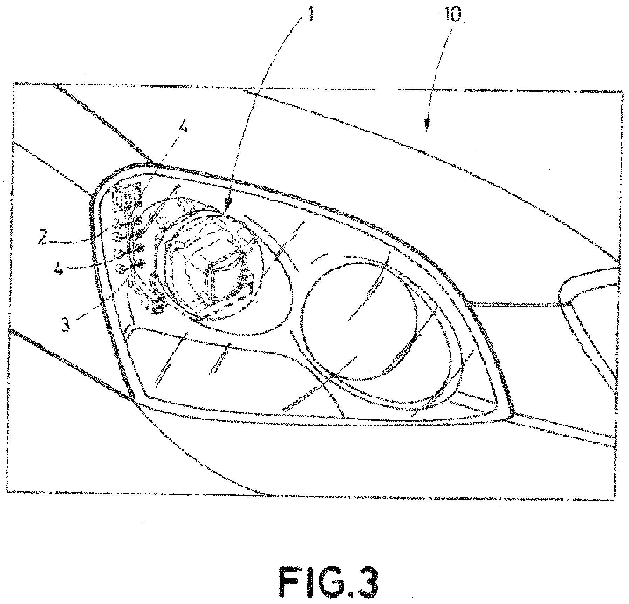

Figure 3 shows a lighting device 1 according to the invention which has been installed in an automotive vehicle 10. The lighting device 1 comprises a housing 2, where the conductive wires 3 are kept in place by means of the staples 4.

In this text, the term "comprises" and its derivations such as "comprising", etc. should not be understood in an excluding sense, that is, these terms should not be interpreted as excluding the possibility that what is described and defined may include further elements, steps, etc.

The invention is obviously not limited to the specific embodiments described herein, but also encompasses any variations and combinations of their features that may be considered by any person skilled in the art for example, as regards the choice of materials, dimensions, components, configuration, etc., within the general scope of the invention as defined in the claims.

## Claims

1. Lighting device (1) comprising
a housing (2) with an inner surface (21);
a pair of walls (22, 22') located in the inner surface (21) of the housing (2);
a plurality of conductive wires (3) located between the walls (22, 22'); and
a retention element (4), so that the conductive wires (3) are surrounded by the walls (22, 22'), a retention portion (41) of the retention element (4) and a portion of the inner surface (21) of the housing (2).

2. Lighting device (1) according to claim 1, wherein the retention element (4) is a staple.

3. Lighting device (1) according to claim 2, wherein the retention portion (41) of the staple (4) has a rounded edge.

4. Lighting device (1) according to any of claims 2 or 3, wherein the staple (4) comprises two piercing pins (42), each piercing pin (42) being nailed into one of the walls (22, 22').

5. Lighting device (1) according to any of claims 2 or 3, wherein the staple (4) comprises two clamping arms (43), each clamping arm (43) being clamped to one of the walls (22, 22').

6. Lighting device (1) according to claim 5, wherein each wall (22, 22') comprises a clamping housing (23) for receiving a clamping arm (43).

7. Lighting device (1) according to any of the preceding claims, wherein the walls (22, 22') are divided into wall portions.

8. Lighting device (1) according to any of the preceding claims, wherein the wall portions are cylindrical protrusions protruding from the housing inner surface (21).

9. Lighting device (1) according to any of the preceding claims, wherein the walls (22, 22') are parallel and the distance between them is comprised between 1 and 2 cm.

10. Lighting device (1) according to any of the preceding claims, wherein the height (h) of each wall (22, 22'), in the sense of distance from the housing (2), is comprised between 0.2 and 1 cm.

11. Lighting device (1) according to any of the preceding claims, wherein the thickness (t) of each wall (22, 22'), in a direction perpendicular to the height and to the direction of the conductive wires, is comprised between 0.2 and 1 cm.

12. Method for manufacturing a lighting device (1), with the steps of
providing a housing (2) with an inner surface (21) and a pair of walls (22, 22') located in the inner surface (21) of the housing (2);
providing a plurality of conductive wires (3) located between the walls;
closing the plurality of conductive wires (3) with a retention element (4), so that the plurality of conductive wires (3) are surrounded by the walls (22, 22'), a retention portion (41) of the retention element (4) and a portion of the inner surface (21) of the housing (2).

13. Method according to claim 12, wherein the step of closing comprises nailing a staple (4) into the walls (22, 22').

14. Method according to claim 12, wherein the step of closing comprises clamping a staple (4) encompassing a portion of the walls (22, 22').

15. Automotive vehicle (10) comprising a lighting device (1) according to any of claims 1 to 11.
